# EUROPÄISCHE PATENTSCHRIFT

(11) **EP 3 649 457 B1**
(45) Veröffentlichungstag und Bekanntmachung des Hinweises auf die Patenterteilung: **06.05.2026**
(21) Anmeldenummer: 18736882.4
(22) Anmeldetag: 02.07.2018
(51) Int. Cl.: G01N 21/25, A45D 44/00, G01N 21/3563, G01N 21/359, G01N 21/84

(54) **VERFAHREN UND VORRICHTUNG ZUM COMPUTERGESTÜTZTEN ERMITTELN EINES HAARFÄRBERESULTATS**
METHOD AND DEVICE FOR COMPUTER-ASSISTED DETERMINATION OF A HAIR COLOURING OUTCOME
PROCÉDÉ ET DISPOSITIF PERMETTANT LA DÉTERMINATION ASSISTÉE PAR ORDINATEUR D'UN RÉSULTAT DE COLORATION CAPILLAIRE

(30) Priorität: 07.07.2017 DE 102017211599
(43) Veröffentlichungstag der Anmeldung: 13.05.2020
(73) Patentinhaber: Henkel AG & Co. KGaA, 40589 Düsseldorf (DE)
(72) Erfinder: KNUEBEL, Hans Georg, 40219 Düsseldorf (DE)
(86) Internationale Anmeldenummer: PCT/EP2018/067805
(87) Internationale Veröffentlichungsnummer: WO 2019/007904

(56) Entgegenhaltungen:
- EP-A1- 1 629 775
- WO-A1-2017/103056
- WO-A1-2018/219895
- US-A1- 2014 118 521

## Beschreibung

Die Erfindung betrifft ein Verfahren und eine Vorrichtung zum computergestützten Ermitteln eines Haarfärberesultats eines Haarfärbemittels zum Färben von Haaren.

Bei einer Färbung von Haar mit einem Haarfärbemittel kann die Intensität der Färbung stark von einem Ausgangszustand des Haars, das gefärbt werden soll, beispielsweise einer Grundhaarfarbe oder einem Schädigungsgrad des Haars, abhängen. Deshalb ist eine Ermittlung des Ausgangszustands des Haars von großer Bedeutung.

Bei herkömmlichen Verfahren zum Ermitteln eines Haarfärberesultats eines Haarfärbemittels zum Färben von Haaren eines Nutzers unter Berücksichtigung des Ausgangszustands des Haars wird in der Regel eine Haarprobe vom Nutzer verwendet, die beispielsweise neben oder in einer gewissen Entfernung von einer Kopfhaut des Nutzers entnommen wird. Die Haarprobe weist herkömmlich ein einzelnes oder mehrere Haare auf. Das Haar eines Nutzers weist jedoch in der Regel unterschiedliche Ausgangszustände abhängig von dem Bereich des Haars auf, aus dem die Haarprobe entnommen wird. Beispielsweise ist das Haar eines Nutzers häufig an Spitzen der Haare unterschiedlich hell, dick, glatt oder beschädigt als an einem Haaransatz der Haare und/oder an einem Hauptteil der Haare und/oder an Strähnen der Haare, o.ä. Für einen Nutzer, der sein Haar färben möchte, ist ein Übereinstimmen von erwartetem und erzieltem Färberesultat über das ganze Haar jedoch von hoher Bedeutung.

Bei herkömmlichen Verfahren zum Ermitteln von Ausgangszustandsparametern werden im Fall ohne Entnahme einer Haarprobe die jeweiligen Ausgangszustandsparameter eines Haars in der Regel mit getrennten Geräten durchgeführt. Dies hat den Nachteil, dass typischerweise die exakte Position des bestimmten, analysierten Haarbereichs bei dem Ermitteln der jeweiligen Parameter für das ganze Haar verloren geht und dadurch eine exakte Übereinstimmung zwischen der Position des Ermittelns eines ersten Ausgangszustandsparameters und der Position des Ermittelns eines zweiten Ausgangszustandsparameters in einem gleichen Bereich schwierig zu erreichen ist.

Dokument US2018357390 A1 (WO2017103056A1) beschreibt ein Verfahren zur Bestimmung einer Haarfärbung, die geeignet ist, einen Ausgangshaarzustand, insbesondere eine Ausgangshaarfarbe in eine gewünschte Haarfarbe zu ändern. Dokument EP 1 629 775 A1 beschreibt ein Verfahren zum Ermitteln eines Haarschädigungsgrades mit Hilfe von Infrarotspektren des Haares und einer multivariaten Komponentenanalyse. Dokument US 2014/118521 A1 beschreibt ein Verfahren zur Bestimmung einer Haarfärbemittelformulierung, die geeignet ist, aus einer anhand eines Bildes bestimmten Ausgangsfarbe eine gewünschte Haarfarbe zu erzielen.

WO2018219895A1 gehört nicht zum Stand der Technik im Sinne vom Artikel 54(3) EPÜ. Das Dokument offenbart ein Verfahren sowie eine Vorrichtung zum Bereitstellen eines Haarbehandlungsmittels.

In verschiedenen Ausführungsbeispielen wird ein Verfahren bereitgestellt, welches einen für zu färbendes Haar eines Nutzers individuellen Färbeausgangszustand, der durch mehrere Ausgangszustandsparameter beschrieben ist, bei einem Ermitteln eines Haarfärberesultats eines Haarfärbemittels zum Färben des Haars berücksichtigt. Das Verfahren soll gleichzeitig die Zuordnung der mehreren Ausgangszustandsparameter zu einem bestimmten, analysierten Bereich des Haarbereichs bei dem Ermitteln des ersten Ausgangszustandsparameters und des zweiten Ausgangszustandsparameters des Haars ermöglichen.

Eine Lösung der vorstehend genannten Aufgabe wird durch das Verfahren nach Anspruch 1 sowie durch die Vorrichtung nach Anspruch 6 bereitgestellt.

Das Verfahren weist ein Ermitteln, für jeden Teilbereich eines Haarbereichs von zu färbendem Haar, eines Wertes eines ersten Ausgangszustandsparameters und eines Wertes eines zweiten Ausgangszustandsparameters in dem Teilbereich auf. Der erste Ausgangszustandsparameter weist eine Information über einen Haarstatus auf. Der zweite Ausgangszustandsparameter weist eine Information über eine Haarfarbe auf. Der erste Ausgangszustandsparameter und der zweite Ausgangszustandsparameter beschreiben einen Färbeausgangszustand des zu färbenden Haars in dem Teilbereich. Das Verfahren weist ferner ein Ermitteln des Färbeausgangszustands des zu färbenden Haars für den Haarbereich auf. Dabei werden die ersten Ausgangszustandsparameter für alle Teilbereiche des Haarbereichs summiert und die zweiten Ausgangszustandsparameter werden für alle Teilbereiche des Haarbereichs summiert. Weiterhin weist das Verfahren ein computergestütztes Ermitteln, für ein bestimmtes Haarfärbemittel, eines prognostizierten Haarfärberesultats des Haars in dem Haarbereich unter Einbeziehung des ermittelten Färbeausgangszustands des Haars in dem Haarbereich.

Das Verfahren ermöglicht eine präzise ortaufgelöste Zuordnung des ersten Ausgangsparameters und gleichzeitig des zweiten Ausgangsparameters zu einem bestimmten analysierten Haarteilbereich. Damit kann eine Zuverlässigkeit einer Vorhersage eines Haarfärberesultats verbessert werden. Dies führt ferner zu einem verringerten Messaufwand, da der erste Ausgangsparameter und der zweite Ausgangsparameter im Wesentlichen gleichzeitig für jeden Teilbereich des Haarbereichs ermittelt werden. Dies ermöglicht ferner niedrigere Kosten, da die Daten über den ersten Ausgangsparameter und den zweiten Ausgangsparameter mittels eines gemeinsamen Vorgangs des Ermittelns eines Färbeausgangszustands und des computergestützten Ermittelns zusammen verarbeitet werden.

Gemäß der Erfindung ist der erste Ausgangszustandsparameter ein Vorschädigungsgrad des zu färbenden Haars.

Gemäß der Erfindung ist der zweite Ausgangszustandsparameter eine Ausgangshaarfarbe des zu färbenden Haars.

In verschiedenen Ausführungsbeispielen weist das Ermitteln des Vorschädigungsgrads, während eines Belichtens jedes Teilbereichs des Haarbereichs mit Nahinfrarot- und/oder Infrarotlicht, ein Aufnehmen, für jeden Teilbereich, eines Spektrums von zumindest einem Teil des Nahinfrarot- und/oder Infrarotlichts auf, welches mit jedem Teilbereich des Haarbereichs wechselgewirkt hat. Das Ermitteln des Vorschädigungsgrads weist ferner ein Vergleichen zumindest eines Teils des Spektrums mit einem mittels Nahinfrarot- und/oder Infrarotspektren und Vorschädigungsgraden einer Mehrzahl von Kalibrierhaarproben gewonnenen spektroskopischen Kalibriermodell auf. Weiterhin weist das Ermitteln des Vorschädigungsgrads ein Ermitteln des Vorschädigungsgrads für jeden Teilbereich des Haarbereichs des zu färbenden Haars unter Einbeziehung des Vergleichs auf.

Gemäß der Erfindung wird das Ermitteln des Wertes des ersten Ausgangszustandsparameters und des Wertes des zweiten Ausgangszustandsparameters mittels einer gemeinsamen Messvorrichtung durchgeführt.

In verschiedenen Ausführungsbeispielen wird das computergestützte Ermitteln des prognostizierten Haarfärberesultats mittels prädiktiver Analytik durchgeführt.

In verschiedenen Ausführungsbeispielen weist das Verfahren ferner ein Darstellen des Haarfärberesultats auf.

In einem anderen Aspekt wird eine Vorrichtung nach Anspruch 6 zum Ermitteln eines Haarfärberesultats eines Haarfärbemittels zum Färben von Haaren bereitgestellt. Die Vorrichtung weist eine Datenverarbeitungsvorrichtung zum Ausführen eines computergestützten Ermittelns eines Haarfärberesultats eines Haarfärbemittels zum Färben von Haaren auf. Dabei ist die Datenverarbeitungsvorrichtung derart eingerichtet ist, das oben beschrieben Verfahren zum Ermitteln eines Haarfärberesultats eines Haarfärbemittels zum Färben von Haaren auszuführen. Ferner weist die Vorrichtung eine Messvorrichtung auf, die eingerichtet ist, das Ermitteln des Wertes des ersten Ausgangszustandsparameters und des Wertes des zweiten Ausgangszustandsparameters für jeden Teilbereich des Haarbereichs des zu färbenden Haars durchzuführen.

In verschiedenen Ausführungsbeispielen erfasst die Messvorrichtung Wellenlängen in einem Spektralbereich von 200 nm bis 25.000 nm, vorzugsweise von 200 nm bis 2.500 nm und ganz besonders bevorzugt 320 bis 2.500 nm.

In verschiedenen Ausführungsbeispielen weist die Messvorrichtung eine Digitalkamera und/oder ein NIR-/IR-Spektrometer auf.

In verschiedenen Ausführungsbeispielen weist die Messvorrichtung ein UV/VIS-Spektralphotometer für und/oder ein NIR-/IR-Spektrometer auf.

In verschiedenen Ausführungsbeispielen weist die Datenverarbeitungsvorrichtung ein Smartphone, ein Tablet oder einen Laptop, Smart Mirror oder einen sonstigen Computer auf.

In verschiedenen Ausführungsbeispielen weist die Vorrichtung ferner eine Ausgabevorrichtung zum Ausgeben von Informationen auf.

In noch einem weiteren Aspekt wird ein Verfahren zum Ermitteln eines Haarfärbemittels zum Färben von Haaren in eine Wunschhaarfarbe bereitgestellt. Das Verfahren weist ein Ermitteln, für jeden Teilbereich eines Haarbereichs von zu färbendem Haar, eines Wertes eines ersten Ausgangszustandsparameters und eines Wertes eines zweiten Ausgangszustandsparameters in dem Teilbereich auf. Der erste Ausgangszustandsparameter weist eine Information über einen Haarstatus auf. Der zweite Ausgangszustandsparameter weist eine Information über eine Haarfarbe auf. Der erste Ausgangszustandsparameter und der zweite Ausgangszustandsparameter beschreiben einen Färbeausgangszustand des zu färbenden Haars in dem Teilbereich. Das Verfahren weist ferner ein Ermitteln des Färbeausgangszustands des zu färbenden Haars für den Haarbereich auf. Weiterhin weist das Verfahren ein Erzeugen einer Mehrzahl von Haarfärberesultaten durch computergestütztes Ermitteln, für jedes Haarfärbemittel einer Mehrzahl von Haarfärbemitteln, eines prognostizierten Haarfärberesultats des Haarbereichs unter Einbeziehung des ermittelten Färbeausgangszustands des Haars in dem Haarbereich. Das Verfahren weist ferner ein Vergleichen jedes ermittelten Haarfärberesultats der Mehrzahl von Haarfärberesultaten mit der Wunschhaarfarbe und ein Auswählen eines Haarfärbemittels der Haarfärbemittel zum Färben von Haaren anhand der ermittelten Haarfärberesultate unter Einbeziehung des Vergleichs auf.

Das Vergleichen jedes ermittelten Haarfärberesultats der erzeugten Mehrzahl von Haarfärberesultaten weist ein Ermitteln einer Mehrzahl von Farbabständen auf. Dabei ist jeder Farbabstand von der Mehrzahl von Farbabständen ein Farbabstand zwischen der Wunschhaarfarbe und des ermittelten Haarfärberesultats für jeweils eines Haarfärbemittel der Mehrzahl von Haarfärbemitteln.

Ausführungsbeispiele der Erfindung sind in den Figuren dargestellt und werden im Folgenden näher erläutert.

Es zeigen
- Figur 1: ein Ablaufdiagramm, welches ein Verfahren zum Ermitteln Färberesultats eines Färbemittels zum Färben von Haaren gemäß verschiedenen Ausführungsbeispielen darstellt;
- Figur 2: eine schematische Darstellung eines Verfahrens und einer Vorrichtung zum Ermitteln eines Färberesultats eines Färbemittels zum Färben von Haaren gemäß verschiedenen Ausführungsbeispielen; und
- Figur 3: ein Ablaufdiagramm, welches ein Verfahren zum Ermitteln eines Färbemittels zum Färben von Haaren in einer Wunschhaarfarbe gemäß verschiedenen Ausführungsbeispielen darstellt.

In der folgenden ausführlichen Beschreibung wird auf die beigefügten Zeichnungen Bezug genommen, die Teil der vorliegenden Anmeldung bilden und in denen zur Veranschaulichung spezifische Ausführungsformen gezeigt sind, in denen die Erfindung ausgeübt werden kann. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In der vorliegenden Beschreibung werden die Begriffe Prädiktive Analytik, Predictive Analytics, Big Data und Data Mining synonym verwendet.

In der vorliegenden Beschreibung wird für Licht mit einer Wellenzahl in einem Bereich von 12.820 (entspricht rund 780 nm) bis 4000 cm⁻¹ (entspricht 2.500 nm) der Begriff Nahinfrarot (NIR) verwendet, und für Licht mit einer Wellenzahl in einem Bereich von 3999 bis 400 cm⁻¹ (entspricht 25.000 nm) der Begriff Infrarot (IR). Licht mit einer Wellenlänge in einem Bereich von 10 bis 380 nm wird mit UV und sichtbares Licht mit einer Wellenlänge von 380 nm bis 780 nm wird mit VIS bezeichnet.

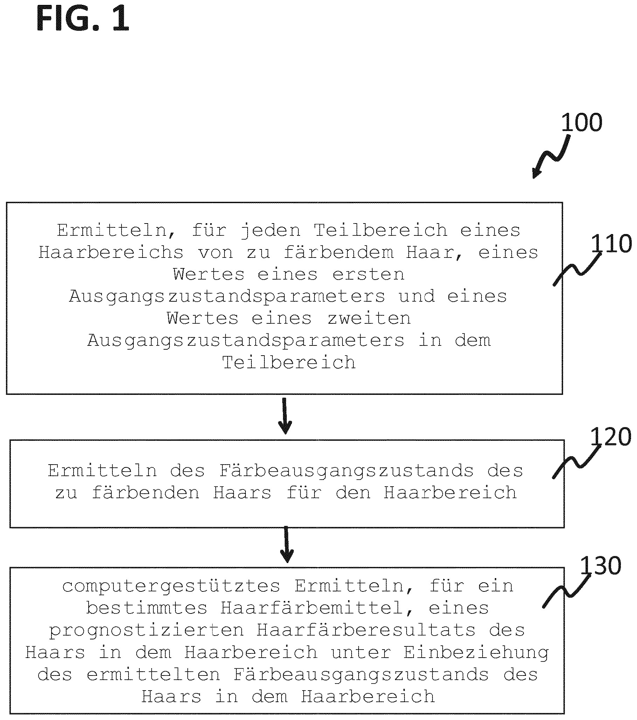

**FIG.1** zeigt ein Ablaufdiagramm, welches ein Verfahren zum Ermitteln eines Färberesultats eines Färbemittels zum Färben von Haaren gemäß verschiedenen Ausführungsbeispielen darstellt.

Das Verfahren 100 weist ein Ermitteln 110, für jeden Teilbereich eines Haarbereichs von zu färbendem Haar, eines Wertes eines ersten Ausgangszustandsparameters und eines Wertes eines zweiten Ausgangszustandsparameters in dem Teilbereich auf. Der erste Ausgangszustandsparameter weist eine Information über einen Haarstatus auf. Der zweite Ausgangszustandsparameter weist eine Information über eine Haarfarbe auf. Der erste Ausgangszustandsparameter und der zweite Ausgangszustandsparameter beschreiben einen Färbeausgangszustand des zu färbenden Haars in dem Teilbereich.

Das Verfahren 100 weist ferner ein Ermitteln 120 des Färbeausgangszustands des zu färbenden Haars für den Haarbereich auf.

Weiterhin weist das Verfahren 100 ein computergestütztes Ermitteln 130, für ein bestimmtes Haarfärbemittel, eines prognostizierten Haarfärberesultats des Haars in dem Haarbereich unter Einbeziehung des ermittelten Färbeausgangszustands des Haars in dem Haarbereich.

Unter dem Begriff "Haarbereich" wird hierein als Summe der Teilbereiche verstanden, beispielsweise das gesamte Haar eines Nutzers.

Das Ermitteln des ersten Ausgangszustandsparameters und des zweiten Ausgangszustandsparameters für jeden Teilbereich eines Haarbereichs erfolgt durch ein Ermitteln des ersten Ausgangszustandsparameters und des zweiten Ausgangszustandsparameters für einen ersten Teilbereich, gefolgt von einem Ermitteln des ersten Ausgangszustandsparameters und des zweiten Ausgangszustandsparameters für einen zweiten Teilbereich, und so weiter bis vorzugsweise die ersten Ausgangszustandsparameter und die zweiten Ausgangszustandsparameter für den kompletten Haarbereich ermittelt worden sind.

Das Ermitteln des ersten Ausgangszustandsparameters und des zweiten Ausgangszustandsparameters für einen Teilbereich wird derart durchgeführt, dass der erste Ausgangszustandsparameter und der zweite Ausgangszustandsparameter im Wesentlichen gleichzeitig für den Teilbereich ermittelt oder gemessen werden. Im Wesentlichen gleichzeitig liegt vor, wenn der erste Ausgangszustandsparameter und der zweite Ausgangszustandsparameter simultan oder nacheinander mit einem kleinen Zeitabstand, beispielsweise weniger als eine Sekunde, beispielsweise weniger als eine Zehntelsekunde, beispielsweise weniger als eine Hundertstelsekunde, gemessen werden können, so dass der analysierte Teilbereich für beide Ausgangszustandsparameter gleich bleibt.

Das Verfahren ermöglicht eine präzise ortaufgelöste Zuordnung des ersten Ausgangsparameters und gleichzeitig des zweiten Ausgangsparameters zu einem bestimmten analysierten Haarteilbereich. Dies führt zu einem verringerten Messaufwand, da der erste Ausgangsparameter und der zweite Ausgangsparameter im Wesentlichen gleichzeitig für jeden Teilbereich des Haarbereichs ermittelt werden. Dies ermöglicht ferner niedrigere Kosten, da die Daten über den ersten Ausgangsparameter und den zweiten Ausgangsparameter mittels eines gemeinsamen Vorgangs des Ermittelns eines Färbeausgangszustands und des computergestützten Ermittelns zusammen verarbeitet werden.

Der Begriff "Teilbereich" wird in Rahmen dieser Beschreibung mit der Bedeutung verwendet, dass es sich um einen Bereich des Haars handelt, der Haare aufweist, wobei die Haare des Teilbereichs im Wesentlichen gleich oder homogen zueinander bezüglich der Haarfarbe oder des Haarstatus sind. Außerdem wird der Begriff "Teilbereich" in Rahmen dieser Beschreibung im Zusammenhang mit dem Flächeninhalt einer von einer Messvorrichtung sichtbaren Fläche des Haars definiert.

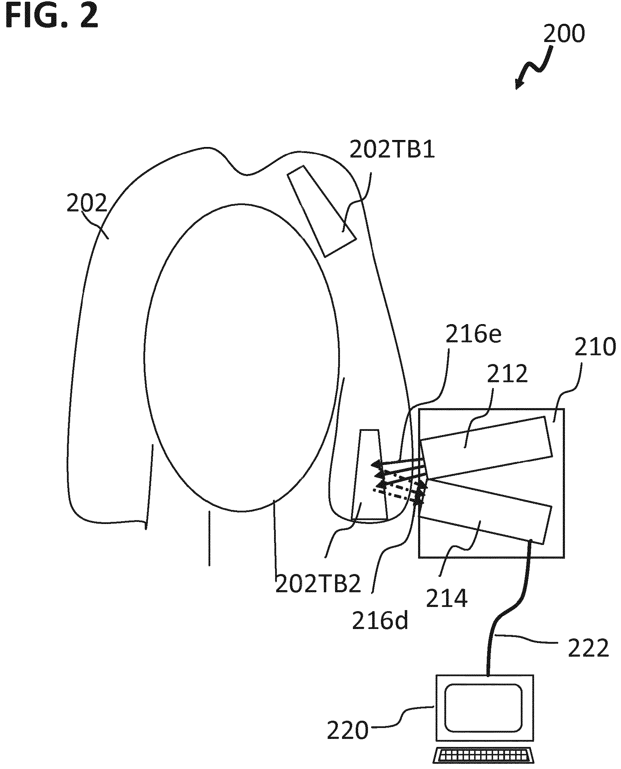

In verschiedenen Ausführungsbeispielen wird eine entsprechende Vorrichtung zum Durchführen des Verfahrens zum Ermitteln eines Färberesultats eines Färbemittels zum Färben von Haaren verwendet. Die Vorrichtung wird unten ausführlicher beschrieben, beispielsweise in FIG.2 und zugehörige Beschreibung.

In verschiedenen Ausführungsbeispielen wird das Ermitteln des Wertes des ersten Ausgangszustandsparameters und des Wertes des zweiten Ausgangszustandsparameters mittels einer gemeinsamen Messvorrichtung, beispielsweise in einer integrierten Einheit, durchgeführt. Die Vorrichtung kann dabei beispielsweise mit einer Signal-abgebenden Einrichtung ausgestattet sein, wobei das Signal ausgelöst wird, wenn der Vorgang des Ermittelns des ersten Ausgangszustandsparameters und des zweiten Ausgangszustandsparameters für den Teilbereich abgeschlossen ist und gegebenenfalls wenn die Vorrichtung für das Ermitteln des ersten Ausgangszustandsparameters und des zweiten Ausgangszustandsparameters für einen anderen Teilbereich bereit ist.

In verschiedenen Ausführungsbeispielen wird das Ermitteln des Wertes des ersten Ausgangszustandsparameters und des Wertes des zweiten Ausgangszustandsparameters mittels zweier Messvorrichtungen, welche sich in einem gemeinsamen Gehäuse befinden, durchgeführt.

Allgemein kann ein Haarstatus beispielsweise eine Schädigung vom Haar, eine Dicke vom Haar (anders ausgedrückt ein Haardurchmesser), eine chemische Zusammensetzung vom Haar oder eine Welligkeit vom Haar aufweisen. Bei der chemischen Zusammensetzung handelt es sich vorzugsweise um den Gehalt einer oder mehrerer Aminosäure(n), insbesondere um den Gehalt einer oder mehrerer Aminosäure(n) ausgewählt aus der Gruppe bestehend aus Glycin, Alanin, Valin, Isoleucin, Leucin, Phenylalanin, Tyrosin, Lysin, Arginin, Histidin, Asparaginsäure, Glutaminsäure, Threonin, Serin, Glutamin, Asparagin, Methionin, Cystein, Prolin, Trypthophan, Cystin, Ornithin, Citrullin und Mischungen davon.

In verschiedenen Ausführungsbeispielen ist der erste Ausgangszustandsparameter Schädigungsgrad des Haars vor dem Färben, auch als ein Vorschädigungsgrad des zu färbenden Haars bezeichnet.

Haar kann durch natürliche oder künstlich herbeigeführte Vorgänge geschädigt werden. Der wichtigste Schädigungstyp kann dabei eine oxidative Schädigung sein. Der Schädigungsvorgang kann dabei ursächlich durch eine Oxidation von Aminosäuren, beispielsweise eine Oxidation der im Haar sehr häufig vorkommenden Aminosäuren Cystin und Cystein zu Cysteinsäure, erfolgen. Cystin kann im Haar intermolekulare Disulfidbrücken (auch als S-S-Brücken bezeichnet) ausbilden, so dass das Cystin äußerst wichtig ist für die mechanische Stabilität des Haars. Die Oxidation dieser Brücken zu Cysteinsäure kann die mechanische Stabilität des Haars zerstören und bei mehrfachen Anwendungen sogar zu einem vollständigen Haarbruch führen.

In verschiedenen Ausführungsbeispielen wird ein in der Nutzung einfaches Verfahren verwendet, welches mit Hilfe von NIR-Spektroskopie und/oder IR-Spektroskopie und multivariaten Kalibrierverfahren eine präzise Bestimmung eines Grades oxidativer Schädigung von Haar ermöglicht.

In verschiedenen Ausführungsbeispielen kann ein Nahinfrarot- (NIR-) und/oder ein Infrarot- (IR-)Spektrum gewonnen werden, beispielsweise mittels ATR-(Nah-)Infrarotspektroskopie (von Englisch "attenuated total reflection", auf Deutsch "abgeschwächte Totalreflexion"). Durch eine Anwendung von mathematischen Modellen kann mittels Vermessung von Kalibrier-Haarproben, welche einen anhand eines bekannten analytischen Verfahrens, wie beispielsweise eines Ermittelns eines Cysteinsäuregehalts mittels Hochleistungsflüssigkeitschromatographie (HPLC), ermittelten Cysteinsäuregehalt aufweisen, ein mathematisches Modell erstellt werden, welches dann bei der Analyse eines Teilbereichs des Haarbereichs des Nutzers anhand des aufgenommenen NIR- oder IR-Spektrums eine Berechnung eines Gehalts an Cysteinsäure, und damit der Haarvorschädigung, erlaubt. Eine Analyse des Spektrums und eine Anwendung des Modells kann dabei beispielsweise (mit geeigneten Apps) mittels bekannter Smartphones, Tablets o.ä. ausgeführt werden.

Die NIR Spektroskopie kann geeignet sein zur Messung an Haaren, weil mit der Nahinfrarotstrahlung nicht nur die Oberfläche der Haare analysiert wird, sondern wegen der kleinen Absorptionsquerschnitte für die nahinfrarote Strahlung (z.B. verglichen mit Licht im sichtbaren Wellenlängenbereich) die Haare zumindest teilweise durchdrungen werden können.

Das Ermitteln des Wertes des ersten Ausgangszustandsparameters kann ein Ermitteln des Wertes eines Vorschädigungsgrads aufweisen. Das Ermitteln des Wertes des Vorschädigungsgrads weist, während eines Belichtens jedes Teilbereichs des Haarbereichs mit Nahinfrarot- und/oder Infrarotlicht, ein Aufnehmen, für jeden Teilbereich, eines Spektrums von zumindest einem Teil des Nahinfrarot- und/oder Infrarotlichts auf, welches mit jedem Teilbereich des Haarbereichs wechselgewirkt hat. Das Ermitteln des Wertes des Vorschädigungsgrads weist ferner ein Vergleichen zumindest eines Teils des Spektrums mit einem mittels Nahinfrarot- und/oder Infrarotspektren und Vorschädigungsgraden einer Mehrzahl von Kalibrierhaarproben gewonnenen spektroskopischen Kalibriermodell auf. Weiterhin weist das Ermitteln des Wertes des Vorschädigungsgrads ein Ermitteln des Vorschädigungsgrads für jeden Teilbereich des Haarbereichs des zu färbenden Haars unter Einbeziehung des Vergleichs auf.

In verschiedenen Ausführungsbeispielen kann ein Kalibriermodell erstellt werden. Das Kalibriermodell wird beispielsweise derart erstellt, dass für die Mehrzahl von Kalibrierhaarproben während eines Belichtens der Kalibrierhaarprobe mit Nahinfrarot- und/oder Infrarotlicht ein Kalibrierspektrum von zumindest einem Teil des Nahinfrarot- und/oder Infrarotlichts aufgenommen wird, welches von der Kalibrierhaarprobe reflektiert und/oder gestreut wird. Der Vorschädigungsgrad der Kalibrierhaarprobe wird dann mittels eines unabhängigen analytischen Verfahrens, wie beispielsweise Hochleistungsflüssigkeitschromatographie (HPLC) ermittelt. Ein Vorschädigungsgrad wird zum Kalibrierspektrum zugewiesen und eine Korrelation zwischen der Mehrzahl von Kalibrierspektren und der Mehrzahl von Vorschädigungsgraden, beispielsweise mittels eines Partial Least Squares-Algorithmus, wird ermittelt.

Mit dem Kalibrationsmodell kann sehr einfach anhand eines für einen Teilbereich des Haarbereichs des Nutzers gewonnenen (N)IR-Spektrums die Konzentration der Cysteinsäure (als Maß für die Haarvorschädigung) aus den Spektren im Vergleich mit den Kalibrationsspektren berechnet werden. Dabei kann das Kalibrationsmodell die Berechnung der Cysteinsäurekonzentration sowohl dann erlauben, wenn das Messspektrum im Wesentlichen einem der Kalibrationsspektren entspricht (oder eine jeweils aus den Spektren ermittelte Größe, beispielsweise ein Wert für die Absorption im für die Cysteinsäure charakteristischen Wellenlängenbereich, beispielsweise eine Äquivalentbreite oder Ähnliches, im Wesentlichen identisch sind), als auch dann, wenn das Messspektrum oder die daraus ermittelte Größe zwischen zwei Kalibrationsspektren oder jenseits eines Kalibrationsspektrums einzuordnen wäre. Anders ausgedrückt kann das Kalibrationsmodell anhand der diskreten Kalibrationsspektren und der dazugehörigen analytisch bestimmten Cysteinsäurekonzentrationswerte als kontinuierliches Modell gebildet werden, welches eine Inter- und Extrapolation der diskreten Datenpunkte ermöglicht.

In verschiedenen Ausführungsbeispielen kann ein vermessener Nahinfrarot (NIR)-Bereich Wellenzahlen von etwa 12.820 cm⁻¹ bis etwa 4000 cm⁻¹ oder Teile davon aufweisen.

In verschiedenen Ausführungsbeispielen können NIR Spektren von Cystin im Wellenzahlbereich von etwa 6200 cm⁻¹ bis etwa 5500 cm⁻¹ charakteristische Absorptionsbanden zeigen. Verändert sich das Haar z.B. durch stärker werdende Schädigung (Zunahme des Cysteinsäuregehaltes), kann sich das im NIR-Spektrum auf die für die Cysteinsäure charakteristischen Banden bei 5022 cm⁻¹ bis 4020 cm⁻¹ auswirken.

Alternativ kann der Cysteinsäuregehalt auch indirekt über eine Verbindung deren Gehalt mit dem Cysteinsäuregehalt korreliert bestimmt werden. Eine solche Verbindung ist beispielsweise Melanin, dessen Gehalt invers mit dem Gehalt von Cysteinsäure korreliert.

Das in den Haaren vorkommende Melanin absorbiert nicht nur im sichtbaren Spektrum (VIS), sondern auch im kurzwelligen Nahinfrarot-Spektrum, d.h. bis etwa 1300 nm. Ohne an diese Theorie gebunden sein zu wollen, wird vermutet, dass es zusätzlich zur Bildung spezifischer Oxidationsprodukte des Melanins kommt, die auch noch Absorptionen im kurzwelligen NIR-Bereich aufweisen.

Es hat sich gezeigt, dass sich auch mit Hilfe von kurzwelligen Nahinfrarotspektren mit einem Wellenzahlbereich von 12.820 bis 7692 cm⁻¹ (800 bis 1300 nm), also in einem Wellenzahlbereich in dem Cysteinsäure keine charakteristische Absorption zeigt, zuverlässige Kalibriermodelle erstellen lassen, die eine Korrelation zwischen dem kurzwelligen Nahinfrarotspektrum und dem Cysteingehalt herstellen und die im Wesentlichen dieselbe Qualität aufweisen

In verschiedenen Ausführungsbeispielen kann der zumindest eine Teil des Nahinfrarot- und/oder Infrarotlichts einen (Infrarot-)Wellenzahlbereich im Bereich 12.820 bis 7692 cm⁻¹aufweisen.

Alternativ kann anstelle des Cysteinsäuregehaltes auch der Gehalt von Abbauprodukten anderer Aminsosäuren, die bei der oxidativen Schädigung entstehen als Maß für die Schädigung herangezogen werden. Beispiele sind die Oxidationsprodukte von Aminosäuren Tryptophan, Methionin, Tyrosin, Histidin oder Lysin.

In verschiedenen Ausführungsbeispielen können aufgrund einer einfachen experimentellen Durchführung durch Nutzung neuartiger miniaturisierter NIR-Sensoren und deren Anschluss an oder deren Integration in eine mobile Datenverarbeitungsvorrichtung ein Smartphone, ein Tablet oder ein Laptop, zur Durchführung des Verfahrens und/oder in der Vorrichtung genutzt werden.

Die miniaturisierten (N)IR-Spektrometer oder (N)IR-Sensoren können insbesondere auch in mobiler Form bereitgestellt werden, beispielsweise in Form von Hand-Spektrometern ("handheld") oder Aufsatz-Spektrometern.

Ein Beispiel für ein geeignetes Hand-Spektrometer ist das "MicroNIR OnSite" der Firma Viavi Solutions Inc. Dieses Spektrometer wird von einem Tablet oder einem Laptop über einen USB-Anschluss mit Strom versorgt und gesteuert und ermöglicht mit einer Messzeit von zwischen 0,25 und 0,5 Sekunden die Aufnahme der Nahinfrarot- und/oder Infrarotspektren der Keratinfasern eines Individuums in Echtzeit. Das Spektrometer weist zwei integrierte Vakuum-Wolfram-Lampen und ein InGaAs-Photodioden-Array mit 128 Pixeln auf. Das "MicroNIR OnSite" arbeitet in einem Wellenzahlenbereich von 6060 bis 10526 cm⁻¹. Der Abstand zwischen den Keratinfasern und dem Glas des Handspektrometers kann zwischen 0 und 15 mm betragen, wobei ein Abstand von 3 mm bevorzugt ist.

In einer Ausführungsform der Erfindung wird das ganze Verfahren zum Ermitteln eines Haarfärberesultats durch das Tablet oder den Laptop durchgeführt, welcher das "MicroNIR OnSite"-Spektrometer mit Strom versorgt und steuert. Alternativ können die gewonnen spektroskopischen Daten an eine weitere (mobile) Datenverarbeitungsvorrichtung gesendet werden, welches dann das Verfahren zum Ermitteln eines Haarfärberesultats durchführt. Die Übertragung der spektroskopischen Daten kann beispielsweise kabellos mittels WLAN (WiFi) oder Bluetooth erfolgen.

Ein weiteres geeignetes Hand-Spektrometer ist das "i-Spec Nano" der Firma B&W Tek. Das Spektrometer wird über einen USB-Anschluss und einer daran angeschlossenen (mobilen) Datenverarbeitungsvorrichtung oder über eine Batterie mit Strom versorgt. Das Spektrometer weist eine Lichtquelle auf und arbeitet in einem Wellenzahlenbereich von 4545 bis 7692 cm⁻¹. Die Übertragung der spektroskopischen Daten an eine (mobile) Datenverarbeitungsvorrichtung, welche dann das Verfahren zum Ermitteln eines Haarfärberesultats durchführt, kann kabellos mittels WLAN (WiFi) oder Bluetooth erfolgen.

Ebenfalls geeignet ist das Hand-Spekrometer "QualitySpec Trek" der Firma ASD Inc. Dieses arbeitet in einem Wellenzahlenbereich von 28571 bis 400 cm⁻¹.

Ein weiteres geeignetes Hand-Spektrometer ist das "SCiO by Consumer Physics", welches mit Hilfe der integrierten App "SpectroScan" die spektroskopischen Daten auf einem smarten Endgerät anzeigt. Das Hand-Spektrometer arbeitet im kurzwelligen Bereich des NIR und zwar bei Wellenzahlen von 9090 bis 14285 cm⁻¹ (entspricht 700 bis 1100 nm). Die Auswertung der gemessenen Daten erfolgt mit Hilfe einer Cloud, in der beispielsweise eine Materialdatenbank, chemometrische Modelle und Algorithmen gespeichert sind.

Noch weitere geeignete Hand-Spektrometer sind von der Firma Attonics Systems erhältlich, welche entweder in Wellenzahlenbereichen von 9090 bis 26.315 cm⁻¹ (VIS-NIR) oder von 3333 bis 10.000 cm⁻¹ (NIR) arbeiten. Diese Spektrometer basieren auf Interferometern und weisen einen hohen Lichtdurchsatz und eine hohe spektrale Auflösung (< 5 nm für VIS-NIR-Spektrometer und < 20 nm für das NIR-Spektrometer) auf. Die Spektrometer weisen einen Multi-Phase Shift Array (MPA) Chip und eine optische Anordnung in einem kreisförmigen Rohr auf. Ferner sind die Spektrometer kompatibel mit mobilen Datenverarbeitungsvorrichtungen.

Weitere Beispiele für VIS-NIR-Spektrometer sind die Miniaturspektrometer "USB2000-VIS-NIR" und "USB4000-VIS-NIR" der Firma Ocean Optics. Dieses Spektrometer arbeitet mit einem Wellenlängenbereich von 350 bis 1000 nm. Die Spektrometer werden über einen USB-Anschluss mit einer Datenverarbeitungsvorrichtung verbunden werden.

Ein weiteres geeignetes, miniaturisiertes NIR-Spektrometer befindet sich integriert in dem Smartphone H2 der Firma Changhong.

Daneben existieren eine Reihe von NIR-Sensoren oder NIR-Auswertungsmodule, welche in Hand-Spektrometer verwendet werden können. Geeignete NIR-Auswertungsmodule sind die Module "DLP^{®} NIRscan" und "DLP^{®} NIRscan Nano" der Firma Texas Instruments. Diese weisen zwei Wolfram-Lampen und InGaAs-Photodioden als Detektoren auf. Das Modul "DLP^{®} NIRscan" arbeitet im Wellenzahlenbereich von 4016 bis 7407 cm⁻¹ und das Modul "DLP^{®} NIRscan Nano" im Bereich von 5882 bis 11111 cm⁻¹. Die Kommunikation der spektroskopischen Daten erfolgt kabellos über Bluetooth Low Energy. Mit Hilfe von "Software Developer Kits" (SDK), beispielsweise das Open Source SDK von KST Technologies, können Apps entwickelt werden, die die spektroskopischen Daten auswerten oder weiter verarbeiten.

Weitere geeignete NIR-Sensoren sind unter der Bezeichnung "NeoSpectra" von Si-Ware Systems erhältlich. Konkrete Sensoren umfassen: NeoSpectra SW62221-1.7, NeoSpectra SW62221-2.1 und NeoSpectra SW62221-2.5, welche in unterschiedlichen Wellenlängenbereichen arbeiten (NeoSpectra SW62221-1.7 = 1.250 bis 1.700 nm, NeoSpectra SW62221-2.1 = 1.300 bis 2.100 nm und NeoSpectra SW62221-2.5 = 1.350 nm bis 2.500 nm) Die Sensoren kombinieren Fourier-Transform-(Nah)Infrarotspektroskopie (FT-IR) mit Mikrosystemtechnik (engl.: microelectromechanical systems, MEMS). Die NIR-Sensoren weisen einen monolithischen MEMS Michelson Interferometer Chip und einen InGaAs-Photodetektor auf.

Allgemein kann eine Information über eine Haarfarbe beispielsweise eine Haarfarbe, eine Waschechtheit, eine Lichtechtheit und/oder eine Grauabdeckung aufweisen. Dabei können die Haarfarbe mittels Färbens von Haar mit einem Haarfärbemittel, auch als Färbevorgang bezeichnet, erzeugt sein.

Unter einer "Farbe" kann hierin ein Zusammenwirken eines Farbtons (d.h. eines spektralen Farbeindrucks, auch als Buntton bezeichnet, was als das verstanden werden kann, was als die "eigentliche Farbe" angesehen wird), einer Farbintensität (d.h. wie intensiv die Farbe erscheint, z.B. verglichen mit einem neutralen Grau, was auch als Sättigung, Farbsättigung, Buntheit, Chromatizität, Chromazität oder Farbtiefe bezeichnet wird) und einer Helligkeit (d.h. wie hell oder dunkel die Farbe erscheint) verstanden werden.

In verschiedenen Ausführungsbeispielen kann die Information über die Haarfarbe beispielsweise eine Parametrisierung in einem bekannten Farbraum aufweisen, beispielsweise in einem L*a*b*-Farbraum (wobei L* die Helligkeit einer Farbe angibt, a* den Grün- und Rotanteil und b* den Blau- und Gelbanteil der Farbe; mitunter wird hierin auch als verkürzende Schreibweise Lab oder einzeln L, a, oder b verwendet) in einem RGB-Farbraum durch Farbanteile in Rot, Grün und Blau, in einem CMYK-Farbraum durch Farbanteile in Cyan, Magenta, Gelb und Schwarz, oder in einem beliebigen anderen Farbraum.

Unter dem Begriff "Farbton" kann hierin, wie oben beschrieben, der spektrale Farbeindruck einer Farbe verstanden werden, unabhängig davon, wie dieser parametrisiert sein kann, beispielsweise als ein Punkt in einem zweidimensionalen Farbraum (z.B. a*b* des L*a*b*-Systems) oder ein Verhältnis von Farbanteilen (wie z.B. beim RGB-Farbraum oder beim CMYK-Farbraum).

In verschiedenen Ausführungsbeispielen kann ein Farbraum, dem die Farbinformation (z.B. die Haarfarbinformation des gefärbten Haars oder des Haars vor der Färbung, was auch als Grundhaarfarbe bezeichnet wird) entstammt, oder in welchem die Farbinformation dargestellt wird (beispielsweise wenn eine Haarfarbe dargestellt wird, siehe unten) so beschaffen sein, dass eine ermittelte oder dargestellte Farbe unabhängig von einem Medium ist, durch welches die Farbe ermittelt oder dargestellt wird (z.B. Farbmessgerät, Bildschirm, Drucker, Scanner, menschliches Auge, usw.). Der Farbraum kann beispielsweise ein L*a*b*-Farbraum sein, die Farbinformation ein beispielsweise mittels a* und b* parametrisierter Farbton. Die einheitliche Darstellung in dem mediumunabhängigen Farbraum kann es beispielsweise ermöglichen, ein realitätsnahes zu erwartendes Färberesultat zu präsentieren, beispielsweise indem eine mittels Färbens erzielte Farbe beim Betrachter des gefärbten Haars denselben Farbeindruck hinterlässt wie in einer Darstellung des zu erwartenden Ergebnisses, beispielsweise als ein Verpackungsaufdruck, eine Anzeige an einem Computerbildschirm, o.ä.

Eine Vorhersage der genannten Eigenschaften von Haarfarben, also ein Ermitteln eines zu erwartenden Färberesultats, ohne den Färbevorgang tatsächlich ausgeführt zu haben, kann beim Haarefärben, also zum Erzeugen einer Haarfarbe, schwieriger sein als in verwandten Gebieten der Farberzeugung, z.B. beim Fotodruck, weil beim Haarefärben typischerweise keine Farbstoffe eingesetzt werden, zumindest nicht unmittelbar, sondern Farbstoffvorstufen. Während eines Färbevorgangs kann sich dann eine Vielzahl von verschiedenen Farbstoffen bilden, deren Eigenschaften als Reinsubstanzen möglicherweise nicht bekannt sind.

Zum Ermitteln von zu erwartenden Haarfarben für einen (z.B. beliebigen) Ausgangszustand und für eine große Zahl von Kombinationen von jeweiligen Konzentrationen einer Mehrzahl von Farbstoffvorstufen können Methoden aus dem Feld der prädiktiven Analytik genutzt werden, um trotz der vielen Parameter präzise Berechnungen von Eigenschaften der Haarfarben, beispielsweise einer Farbinformation, aber auch beispielsweise einer Waschechtheit, einer Grauabdeckung oder/und einer Lichtechtheit, zu ermöglichen.

In verschiedenen Ausführungsbeispielen ist der zweite Ausgangszustandsparameter eine Ausgangshaarfarbe des zu färbenden Haars. Dabei kann die Ausgangshaarfarbe in einem Farbraum, beispielsweise einem L*a*b*-Farbraum, einem RGB-Farbraum, o.ä., parametrisiert sein.

In verschiedenen Ausführungsbeispielen werden ein in der Nutzung einfaches Verfahren und eine entsprechende Vorrichtung verwendet. Die Vorrichtung wird beispielsweise in FIG.2 und zugehöriger Beschreibung ausführlicher beschrieben. Die Vorrichtung ermöglicht eine präzise Bestimmung der Ausgangshaarfarbe, beispielsweise in einem Farbraum, beispielsweise einem L*a*b*-Farbraum, einem RGB-Farbraum, o.ä.. Die Vorrichtung zum Ermitteln der Ausgangshaarfarbe weist beispielsweise eine Lampe auf. Dabei emittiert die Lampe ein Licht im sichtbaren Bereich. Ferner weist die Vorrichtung zum Ermitteln der Ausgangshaarfarbe beispielsweise eine Kamera auf, beispielsweise eine Digitalkamera auf. Beispielsweise ist die Vorrichtung zum Ermitteln der Ausgangshaarfarbe eine, die einen Wert der Ausgangshaarfarbe ermittelt, der den Resultaten stationärer Geräte mit folgenden Parametern entspricht: eine Lichtquelle D65 mit diffuser Beleuchtung, beispielsweise mittels einer Ulbricht-Kugel und unter einem 8 ° Winkel inklusive Glanz.

In verschiedenen Ausführungsbeispielen erfolgt das Ermitteln des Färbeausgangszustands für den Haarbereich mittels der Summe des Ermittelns des ersten Ausgangszustandsparameters und des zweiten Ausgangszustandsparameters für alle Teilbereiche des Haarbereichs.

In verschiedenen Ausführungsbeispielen wird das computergestützte Ermitteln des erzielbaren Haarfärberesultats mittels prädiktiver Analytik durchgeführt.

Prädiktive Analytik kann allgemein als ein Verfahren beschrieben werden, um aus großen Datenmengen Informationen zu extrahieren und aus diesen Daten ein Modell zu erzeugen, welches es erlaubt, auch für Werte, die nicht Teil des Datensatzes sind, Vorhersagen zu treffen. Bei Anwendung eines Prädiktive Analytik Verfahrens kann typischerweise ein Teil des Datensatzes als Trainings-Datensatz (auch als Trainingssatz oder Trainingsdaten bezeichnet) genutzt werden. Anhand dieses Trainingsdatensatzes können ein oder mehrere Modelle erzeugt werden, welche dann anhand der Daten, die nicht Teil des Trainingsdatensatzes sind, anhand der gesamten Daten, oder anhand eines speziell ausgewählten Teils der Daten, getestet werden können.

Mittels der Prädiktiven Analytik kann unter Verwendung von Ausgangshaarfarben- und Haarvorschädigung-Daten eine Beziehung ermittelt werden zwischen einer Mehrzahl von Färbevoraussetzungsparameter und einem Haarfärberesultat. Dabei kann die Mehrzahl von Färbevoraussetzungsparametern eine Mehrzahl von Konzentrationen von Farbstoffvorstufen eines Haarfärbemittels und den Färbeausgangszustand des Haarbereichs aufweisen.

In verschiedenen Ausführungsbeispielen kann das computergestützte Ermitteln des erzielbaren Haarfärberesultats mittels einer Datenverarbeitungsvorrichtung ausgeführt werden.

Die Datenverarbeitungsvorrichtung kann beispielsweise einen Computer aufweisen, oder jede andere Datenverarbeitungsvorrichtung, die geeignet ist, die Daten zu speichern und bereitzustellen und das Prädiktive-Analytik-Verfahren auszuführen, also beispielsweise jede Datenverarbeitungsvorrichtung mit hinreichend großem Datenspeicher und hinreichend leistungsfähigem Prozessor.

Die Datenverarbeitungsvorrichtung kann beispielsweise eine mobile Datenverarbeitungsvorrichtung, beispielsweise ein Smartphone, ein Tablet, ein Smart Mirror oder einen Laptop, aber auch einen sonstigen Computer aufweisen, oder jede andere Datenverarbeitungsvorrichtung, die geeignet ist, die Daten zu speichern und bereitzustellen, den Vergleich auszuführen und das Modell anzuwenden, ggf. auch das Modell zu erstellen, also beispielsweise jede Datenverarbeitungsvorrichtung mit hinreichend großem Datenspeicher und hinreichend leistungsfähigem Prozessor.

In verschiedenen Ausführungsbeispielen kann die Datenverarbeitungsvorrichtung mindestens eine Eingabevorrichtung zum Eingeben von Informationen in die Datenverarbeitungsvorrichtung aufweisen, beispielsweise zum Eingeben von Cysteinsäuregehalt-Messwerten für die Kalibrierung und ggf. zum Eingeben von Anweisungen, Parametern usw. für ein Ausführen des Verfahrens.

In verschiedenen Ausführungsbeispielen weist das Verfahren ferner ein Darstellen des Haarfärberesultats auf.

In verschiedenen Ausführungsbeispielen kann die Datenverarbeitungsvorrichtung mindestens eine Ausgabevorrichtung zum Ausgeben von Informationen aufweisen, beispielsweise zum Ausgeben von Ergebnissen des Verfahrens.

In verschiedenen Ausführungsbeispielen kann die mindestens eine Ausgabevorrichtung einen Bildschirm und/oder einen Drucker aufweisen.

**FIG.2** zeigt in einer Ansicht 200 eine schematische Darstellung eines Verfahrens und einer Vorrichtung zum Ermitteln eines Färberesultats eines Färbemittels zum Färben von Haaren gemäß verschiedenen Ausführungsbeispielen.

In verschiedenen Ausführungsbeispielen kann zum Ermitteln des Färberesultats des Färbemittels zum Färben von Haaren eine Vorrichtung 210 genutzt werden, wie sie in FIG.2 beispielhaft schematisch in einer Ansicht 200 dargestellt ist.

In verschiedenen Ausführungsbeispielen weist die Vorrichtung 210 dabei eine Messvorrichtung 210, die eingerichtet ist, das Ermitteln des Wertes des ersten Ausgangszustandsparameters und des Wertes des zweiten Ausgangszustandsparameters für jeden Teilbereich des Haarbereichs des zu färbenden Haars durchzuführen. Die Messvorrichtung weist beispielsweise eine Emissionsvorrichtung 212 zum Emittieren eines Signals, beispielsweise von Licht, und eine Detektionsvorrichtung 214 zum Detektieren des von der Emissionsvorrichtung 212 emittierten Signals nach einem Wechselwirken mit dem Haar auf. Beispielsweise emittiert die Emissionsvorrichtung 212 Licht 216e mit Wellenlängen in dem sichtbarem, NIR- oder/und IR-Bereich. Die Detektionsvorrichtung 214 detektiert beispielsweise Licht 216e mit Wellenlängen in dem sichtbarem, NIR- oder/und IR-Bereich entsprechend der Wellenlänge des emittierten Lichts. Die Emissionsvorrichtung 212 und die Detektionsvorrichtung 214 können unter einem gemeinsamen Gehäuse unterbracht werden. Mit anderen Worten: die Emissionsvorrichtung 212 und die Detektionsvorrichtung 214 bilden beispielsweise eine integrierte Einheit.

In verschiedenen Ausführungsbeispielen weist die Vorrichtung 210 eine Datenverarbeitungsvorrichtung, beispielsweise zum Ausführen des computergestützten Ermittelns des Haarfärberesultats des Haarfärbemittels zum Färben von Haaren. Dabei ist die Datenverarbeitungsvorrichtung beispielsweise eingerichtet, das in FIG.1 beschriebene Verfahren zum Ermitteln eines Haarfärberesultats eines Haarfärbemittels zum Färben von Haaren auszuführen.

Gemäß verschiedenen Ausführungsbeispielen kann zum Ermitteln eines Färberesultats eines Färbemittels zum Färben von Haaren ein Haarbereich 202 eines Nutzers untersucht werden. Dabei weist der Haarbereich 202 mindestens einen ersten Teilbereich 202TB1 und einen lateral neben dem ersten Teilbereich angeordneten, zweiten Teilbereich 202TB2 auf. Dabei kann der erste Teilbereich 202TB1 frei oder im Wesentlichen frei von Überschneidung mit dem zweiten Teilbereich 202TB2 sein. Der erste Teilbereich 202TB1 ist beispielsweise ein Bereich des Haars in der unmittelbaren Nähe der Kopfhaut, beispielsweise in einer gewissen Entfernung von der Kopfhaut in einem Bereich von einigen Millimetern bis wenigen Zentimetern. Der zweite Teilbereich 202TB2 ist beispielsweise ein Bereich des Haars, der Spitzen von Haaren aufweist. Beispielsweise weist der Haarbereich 202 eine Vielzahl von Teilbereichen auf, wobei die Summe der Teilbereiche das gesamte Haar des Nutzers aufweist.

Der Begriff "Teilbereich" wird in Rahmen dieser Beschreibung mit der Bedeutung verwendet, dass es sich um einen Bereich des Haars handelt, wobei die Haare des Teilbereichs im Wesentlichen gleich oder homogen zueinander bezüglich der Haarfarbe oder des Haarstatus sind. Außerdem wird der Begriff "Teilbereich" in Rahmen dieser Beschreibung im Zusammenhang mit der Flächeninhalt der von einer Messvorrichtung 210 sichtbaren Fläche des Haars definiert. Mit anderen Worten: Der Teilbereich des Haarbereichs entspricht der Fläche von Haaren, die von der Messvorrichtung 210 mittels des sichtbarem, NIR- oder/und IR-Lichts 216e beleuchtet wird und auf der das Licht 216e wechselwirkt, wobei der Teilbereich von der Messvorrichtung derart definiert wird, dass der Teilbereich Haare aufweist, die zueinander eine im Wesentlichen gleiche Haarfarbe und einen im Wesentlichen gleichen Haarstatus aufweisen. Der Teilbereich kann dabei eine Fläche aufweisen, die beispielsweise in einem Bereich von ungefähr 1 cm² bis ungefähr 10 cm² liegt.

In verschiedenen Ausführungsbeispielen wird jeder Teilbereich des Haarbereichs mit dem von der Emissionsvorrichtung 212 emittierten Licht beleuchtet. Das Licht 216e wird nach der Wechselwirkung mit dem Teilbereich in ein zu analysierendes Licht 216d umgewandelt. Das zu analysierendes Licht tritt dann in die Detektionsvorrichtung 214 ein.

In verschiedenen Ausführungsbeispielen weist die Emissionsvorrichtung 212 eine Lampe auf, die ein Licht mit Wellenlängen in einem Spektralbereich von 200 nm bis 25.000 nm, vorzugsweise 200 bis 2.500 nm und ganz besonders bevorzugt 380 nm bis 2.500 nm emittiert. Dabei werden die Wellenlängen in dem Spektralbereich von 380 nm bis 780 nm (sichtbares Licht) für das Ermitteln der Ausgangshaarfarbe verwendet. Die Wellenlängen in dem Spektralbereich von 780 nm bis 25.000 nm ((Nah-)Infrarotes Licht) werden für das Ermitteln des Vorschädigungsgrads verwendet. Die Lampe kann eine einzige Lichtquelle aufweisen, die das Licht mit Wellenlängen in dem Spektralbereich von 380 nm bis 25.000 nm, vorzugsweise 380 nm bis 25.000 nm, emittiert. Alternativ kann die Lampe zwei oder mehrere Lichtquellen aufweisen, beispielsweise eine erste Lichtquelle mit einem emittierbaren Licht in dem Wellenlängenbereich von 380 nm bis 780 nm und eine zweite Lichtquelle mit einem emittierbaren Licht in dem Wellenlängenbereich von 780 nm bis 25.000 nm, vorzugsweise 780 nm bis 25.000 nm. Wenn die Lampe mehrere Lichtquellen aufweist, wird die Strahlung aller Lichtquellen auf dem gleichen Teilbereich gerichtet. Eine Lichtquelle kann mehrere Lichtquelleneinheiten, beispielsweise mehrere (organische) lichtemittierende Bauelemente (LED oder OLED) aufweisen.

In verschiedenen Ausführungsbeispielen weist die Detektionsvorrichtung 214 ein Spektrometer zum Aufnehmen von zumindest einem Teil des Spektrums von NIR- oder IR-Licht auf, welches mit dem Teilbereich des Haarbereichs wechselgewirkt hat. Ferner weist die Detektionsvorrichtung 214 beispielsweise eine Kamera, beispielsweise eine Digitalkamera zum Aufnehmen von zumindest einem Teil des Spektrums des sichtbaren Lichts auf, welches mit dem gleichen Teilbereich des Haarbereichs wie das NIR- oder IR-Licht wechselgewirkt hat. Dabei können das NIR-/IR-Spektrometer und die Kamera in einer unmittelbaren Nähe angeordnet sein. Beispielsweise sind das NIR-/IR-Spektrometer und die Kamera derart angeordnet, dass das NIR-/IR-Spektrometer und die Kamera den gleichen Teil von zu analysierenden Licht 216d detektieren.

Alternativ kann anstelle einer Kamera ein UV/VIS-Spektralphotometer zur Ermittlung einer Haarfarbe verwendet werden.

Die Messvorrichtung 210 ist dafür geeignet, gleichzeitig für denselben Teilbereich die Messungen oder das Ermitteln des ersten Ausgangszustandsparameters und des zweiten Ausgangszustandsparameters vorzunehmen. Beispielsweise weist die Messvorrichtung 210 zwei optische Messsysteme (zwei Emissionsvorrichtungen und zwei Detektionsvorrichtungen) auf, d.h. ein erstes, optisches Messsystem für das Ermitteln des ersten Ausgangszustandsparameters und ein zweites, optisches Messsystem für das Ermitteln des zweiten Ausgangszustandsparameters. Die zwei optischen Messsysteme sind auf denselben Teilbereich fokussiert. Beispielsweise sind die Ausrichtung der optischen Achse des ersten, optischen Messsystems und die Ausrichtung der optischen Achse des zweiten, optischen Messsystems derart eingerichtet, dass der gleiche Teilbereich analysiert wird.

In verschiedenen Ausführungsbeispielen kann das Spektrum von sichtbarem, NIR- oder IR-Licht an eine Datenverarbeitungsvorrichtung 220 übertragen werden. Die Übertragung ist mit dem Bezugszeichen 222 gekennzeichnet. Die Übertragung kann auf bekanntem Weg erfolgen, beispielsweise mittels eines Datenkabels, kabelloser Datenübertragung (z.B. Bluetooth, WLAN, Thread, ZigBee oder Near Field Communication (NFC)), oder eine Übertragung kann innerhalb einer Vorrichtung erfolgen, wenn die Messvorrichtung, d.h. das Spektrometer und die Kamera (und ggf. die Lampe) Teil einer Datenverarbeitungsvorrichtung 220 ist oder die Messvorrichtung 210 mit einer integrierten Datenverarbeitungsvorrichtung 220 gebildet ist.

In verschiedenen Ausführungsbeispielen ist die Datenverarbeitungsvorrichtung 220 ein Smartphone, ein Tablet, ein Smart Mirror oder ein Laptop oder ein sonstiger Computer oder weist diese auf.

Zum Empfangen und Weiterverarbeiten der Daten und für die Modellbildung kann die Datenverarbeitungsvorrichtung 220 in verschiedenen Ausführungsbeispielen mit einer entsprechenden Software ausgestattet sein, beispielsweise einer App.

In verschiedenen Ausführungsbeispielen kann die Datenverarbeitungsvorrichtung mindestens eine Ausgabevorrichtung zum Ausgeben von Informationen aufweisen, beispielsweise zum Ausgeben von Ergebnissen des Verfahrens.

In verschiedenen Ausführungsbeispielen kann die mindestens eine Ausgabevorrichtung einen Bildschirm und/oder einen Drucker aufweisen.

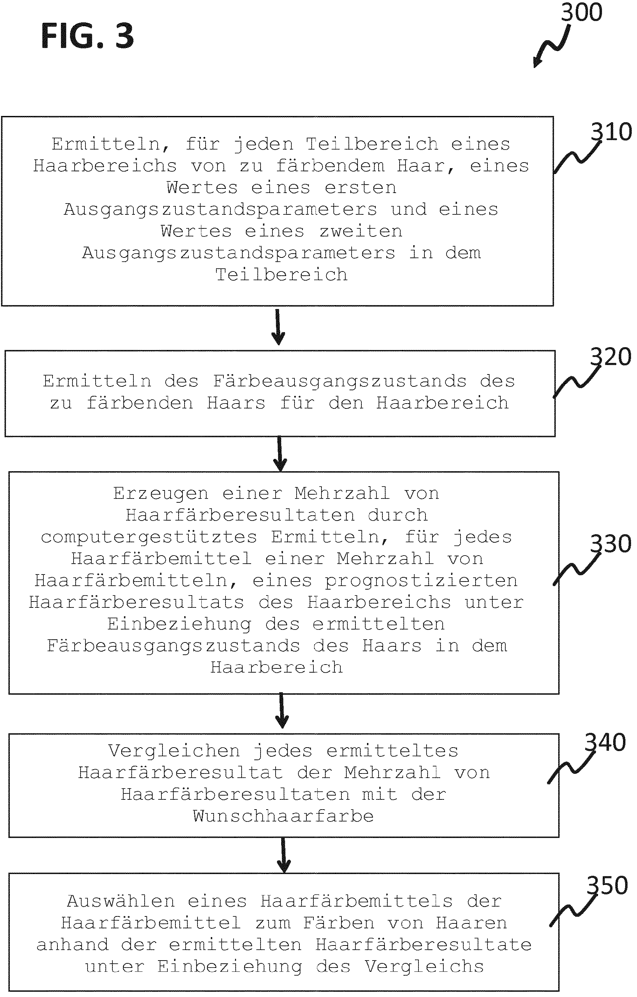

**FIG.3** zeigt ein Ablaufdiagramm, welches ein Verfahren zum Ermitteln eines Färbemittels zum Färben von Haaren in einer Wunschhaarfarbe gemäß verschiedenen Ausführungsbeispielen darstellt.

Das Verfahren 300 weist ein Ermitteln 310, für jeden Teilbereich eines Haarbereichs von zu färbendem Haar, eines Wertes eines ersten Ausgangszustandsparameters und eines Wertes eines zweiten Ausgangszustandsparameters in dem Teilbereich auf. Dabei weist der erste Ausgangszustandsparameter eine Information über einen Haarstatus auf. Der zweite Ausgangszustandsparameter weist wiederum eine Information über eine Haarfarbe auf. Der erste Ausgangszustandsparameter und der zweite Ausgangszustandsparameter beschreiben einen Färbeausgangszustand des zu färbenden Haars in dem Teilbereich. Das Verfahren 300 weist ferner ein Ermitteln 320 des Färbeausgangszustands des zu färbenden Haars für den Haarbereich auf. Weiterhin weist das Verfahren 300 ein Erzeugen 330 einer Mehrzahl von Haarfärberesultaten durch computergestütztes Ermitteln, für jedes Haarfärbemittel einer Mehrzahl von Haarfärbemitteln, eines prognostizierten Haarfärberesultats des Haarbereichs unter Einbeziehung des ermittelten Färbeausgangszustands des Haars in dem Haarbereich. Das Verfahren 300 weist ferner ein Vergleichen 340 jedes ermittelten Haarfärberesultats der Mehrzahl von Haarfärberesultaten mit der Wunschhaarfarbe und ein Auswählen 350 eines Haarfärbemittels der Haarfärbemittel zum Färben von Haaren anhand der ermittelten Haarfärberesultate unter Einbeziehung des Vergleichs auf.

Das Verfahren zum Ermitteln des Färbemittels zum Färben von Haaren in einer Wunschhaarfarbe kann die vorangehend beschriebenen grundlegenden Merkmale und Funktionsweisen des in FIG.1 beschriebenen Verfahrens zum Ermitteln eines Färberesultats eines Färbemittels zum Färben von Haaren aufweisen. Beispielsweise werden die Schritte des Ermittelns 310 eines Wertes eines ersten Ausgangszustandsparameters und eines Wertes eines zweiten Ausgangszustandsparameters dem Schritt und des Ermitteln 320 des Färbeausgangszustands dem in FIG.1 beschriebenen Ermitteln 110 eines Wertes eines ersten Ausgangszustandsparameters und eines Wertes eines zweiten Ausgangszustandsparameters oder dem in FIG.1 beschriebenen Ermitteln 120 des Färbeausgangszustands entsprechen oder wird im Wesentlichen gleich ausgeführt.

Der Schritt des Erzeugens 330 einer Mehrzahl von Haarfärberesultaten durch computergestütztes Ermitteln, für jedes Haarfärbemittel einer Mehrzahl von Haarfärbemitteln, eines prognostizierten Haarfärberesultats wird beispielsweise mittels eines Wiederholens des in der FIG.1 beschriebenen computergestützten Ermittelns, für ein bestimmtes Haarfärbemittel, eines prognostizierten Haarfärberesultats auf jedem Haarfärbemittel einer Mehrzahl von Haarfärbemitteln.

In verschiedenen Ausführungsbeispielen weist das Vergleichen 340 jedes ermittelten Haarfärberesultats der erzeugten Mehrzahl von Haarfärberesultaten ein Ermitteln einer Mehrzahl von Farbabständen auf. Dabei ist jeder Farbabstand von der Mehrzahl von Farbabständen ein Farbabstand zwischen der Wunschhaarfarbe und des ermittelten Haarfärberesultats für jeweils eines Haarfärbemittel der Mehrzahl von Haarfärbemitteln. Das Vergleichen 340 weist ferner ein Ermitteln eines minimalen Farbabstands aus der Mehrzahl von Farbabständen. Weiterhin weist das Auswählen 350 eines Haarfärbemittels ein Ermitteln des dem minimalen Farbabstand zugeordneten Haarfärbemittels als das Haarfärbemittel zum Färben von Haaren in der Wunschhaarfarbe auf.

Mittels der Methoden aus der Prädiktiven Analytik kann es nun möglich sein, einem Nutzer (z.B. einem Verbraucher) ein Farbresultat zu garantieren, welches so nah wie möglich an seiner Wunschhaarfarbe ist (soweit dies chemisch möglich ist).

Aus den prognostizierten Haarfärberesultaten kann in verschiedenen Ausführungsbeispielen eine Wunschhaarfarbe ausgewählt werden.

Die Wunschhaarfarbe kann in verschiedenen Ausführungsbeispielen, beispielsweise vom Nutzer, derart definiert sein, dass nach einem Präsentieren der prognostizierten Haarfärberesultate der Nutzer die Wunschhaarfarbe auswählt. Die prognostizierten Haarfärberesultate können beispielsweise mittels einer Anzeigevorrichtung, z.B. mittels eines Bildschirms, z.B. eines Computerbildschirms, oder mittels einer sonstigen Ausgabevorrichtung präsentiert werden, beispielsweise ausgedruckt werden. Der Nutzer kann in verschiedenen Ausführungsbeispielen die Wunschhaarfarbe mittels eines Eingebens der Auswahl in eine Datenverarbeitungsvorrichtung, z.B. einen Computer, definieren. Dabei kann der Eingabevorgang jede beliebige Art der Eingabe aufweisen, beispielsweise ein Berühren eines Bildschirms, ein Anklicken eines Bildschirmbereichs mit einem Mauszeiger, ein Eingeben von Informationen mittels Tastatur, eine Sprachanweisung. Nachdem der Nutzer die Wunschhaarfarbe ausgewählt hat, kann dem Nutzer ferner angezeigt oder angesagt werden, wo das Färbemittel zur Erzielung der gewählten Wunschhaarfarbe erhältlich ist. Zusätzlich oder alternativ kann dem Nutzer ermöglicht werden, eine Online-Bestellung, vorzugsweise durch Aufrufen einer Internetseite des Herstellers des Färbemittels zur Erzielung der gewählten Wunschhaarfarbe auszulösen.

Weitere vorteilhafte Ausgestaltungen des Verfahrens ergeben sich aus der Beschreibung. Der Schutzumfang der Erfindung wird durch die beigefügten Ansprüche definiert.

## Patentansprüche

1. Verfahren zum Ermitteln eines Haarfärberesultats eines Haarfärbemittels zum Färben von Haaren, das Verfahren aufweisend:
- Ermitteln, für jeden Teilbereich eines Haarbereichs von zu färbendem Haar, eines Wertes eines ersten Ausgangszustandsparameters und eines Wertes eines zweiten Ausgangszustandsparameters in dem Teilbereich (110),
wobei der erste Ausgangszustandsparameter ein Vorschädigungsgrad des zu färbenden Haars ist,
wobei der zweite Ausgangszustandsparameter eine Ausgangshaarfarbe des zu färbenden Haars ist
wobei das Ermitteln des Wertes des ersten Ausgangszustandsparameters und des Wertes des zweiten Ausgangszustandsparameters mittels einer gemeinsamen Messvorrichtung durchgeführt wird,
wobei der erste Ausgangsparameter und der zweite Ausgangsparameter im Wesentlichen gleichzeitig für jeden Teilbereich des Haarbereichs ermittelt wird, und
wobei der erste Ausgangszustandsparameter und der zweite Ausgangszustandsparameter einen Färbeausgangszustand des zu färbenden Haars in dem Teilbereich beschreiben;
- Ermitteln des Färbeausgangszustands des zu färbenden Haars für den Haarbereich (120);
- computergestütztes Ermitteln, für ein bestimmtes Haarfärbemittel, eines prognostizierten Haarfärberesultats des Haars in dem Haarbereich unter Einbeziehung des ermittelten Färbeausgangszustands des Haars in dem Haarbereich (130) wobei das Verfahren ferner eingerichtet ist zum Ermitteln eines Haarfärbemittels zum Färben von Haaren in eine Wunschhaarfarbe, das Verfahren ferner aufweisend:
- Erzeugen einer Mehrzahl von Haarfärberesultaten durch computergestütztes Ermitteln, für jedes Haarfärbemittel einer Mehrzahl von Haarfärbemitteln, eines prognostizierten Haarfärberesultats des Haarbereichs unter Einbeziehung des ermittelten Färbeausgangszustands des Haars in dem Haarbereich (330);
- Vergleichen jedes ermittelten Haarfärberesultats der erzeugten Mehrzahl von Haarfärberesultaten mit der Wunschhaarfarbe (340);
- Auswählen eines Haarfärbemittels der Haarfärbemittel zum Färben von Haaren anhand der ermittelten Haarfärberesultate unter Einbeziehung des Vergleichs (350) wobei das Vergleichen jedes ermittelten Haarfärberesultats der Mehrzahl von Haarfärberesultaten aufweist:
- Ermitteln einer Mehrzahl von Farbabständen, wobei jeder Farbabstand von der Mehrzahl von Farbabständen ein Farbabstand ist zwischen der Wunschhaarfarbe und des ermittelten Haarfärberesultats für jeweils eines Haarfärbemittel der Mehrzahl von Haarfärbemitteln;
- Ermitteln eines minimalen Farbabstands aus der Mehrzahl von Farbabständen; und
wobei das Auswählen eines Haarfärbemittels aufweist:
- Ermitteln des dem minimalen Farbabstand zugeordneten Haarfärbemittels als das Haarfärbemittel zum Färben von Haaren in der Wunschhaarfarbe.

2. Verfahren nach Anspruch 1,
wobei das Ermitteln des Vorschädigungsgrads aufweist:
- während eines Belichtens jedes Teilbereichs des Haarbereichs mit Nahinfrarot- und/oder Infrarotlicht, Aufnehmen, für jeden Teilbereich, eines Spektrums von zumindest einem Teil des Nahinfrarot- und/oder Infrarotlichts, welches mit jedem Teilbereich des Haarbereichs wechselgewirkt hat;
- Vergleichen zumindest eines Teils des Spektrums mit einem mittels Nahinfrarot- und/oder Infrarotspektren und Vorschädigungsgraden einer Mehrzahl von Kalibrierhaarproben gewonnenen spektroskopischen Kalibriermodell; und
- Ermitteln des Vorschädigungsgrads für jeden Teilbereich des Haarbereichs des zu färbenden Haars unter Einbeziehung des Vergleichs.

3. Verfahren nach einem der Ansprüche 1 bis 2,
wobei das computergestützte Ermitteln des prognostizierten Haarfärberesultats mittels prädiktiver Analytik durchgeführt wird.

4. Verfahren nach einem der Ansprüche 1 bis 3,
das Verfahren ferner aufweisend ein Darstellen des Haarfärberesultats.

5. Verfahren nach einem der Ansprüche 1 bis 4, ferner umfassend:
- Bereitstellen, wo ein ausgewähltes Färbemittel erhältlich ist und/oder
- Ermöglichen, eine Online-Bestellung des ausgewählten Färbemittels auszulösen.

6. Vorrichtung zum Ermitteln eines Haarfärberesultats eines Haarfärbemittels zum Färben von Haaren aufweisend:
- eine Datenverarbeitungsvorrichtung (220) zum Ausführen eines computergestützten Ermittelns eines Haarfärberesultats eines Haarfärbemittels zum Färben von Haaren, wobei die Datenverarbeitungsvorrichtung eingerichtet ist, das Verfahren gemäß Anspruch 1 auszuführen; und
- eine Messvorrichtung (210), die eingerichtet ist, das Ermitteln des Wertes des ersten Ausgangszustandsparameters und des Wertes des zweiten Ausgangszustandsparameters für jeden Teilbereich des Haarbereichs des zu färbenden Haars durchzuführen.

7. Vorrichtung nach Anspruch 6,
wobei die Messvorrichtung Wellenlängen in einem Spektralbereich von 200 nm bis 25.000 nm, vorzugsweise 200 nm bis 2.500 nm und mehr bevorzugt 380 nm bis 2.500 nm, erfasst.

8. Vorrichtung nach Anspruch 6 oder 7,
wobei die Messvorrichtung eine Digitalkamera und/oder ein NIR-/IR-Spektrometer aufweist.

9. Vorrichtung nach Anspruch 6 oder 7,
wobei die Messvorrichtung ein UV/VIS-Spektralphotometer und/oder ein NIR-/IR-Spektrometer aufweist.

10. Vorrichtung nach einem der Ansprüche 6 bis 9,
wobei die Datenverarbeitungsvorrichtung ein Smartphone, ein Tablet oder einen Laptop oder einen sonstigen Computer aufweist.

## Claims

1. A method for determining a hair dyeing result of a hair dye for dyeing hair, the method comprising:
- determining, for each sub-region of a region of hair to be dyed, a value of a first initial state parameter and a value of a second initial state parameter in the sub-region, wherein the first initial state parameter is a degree of prior damage to the hair to be dyed, wherein the second initial state parameter is an initial hair colour of the hair to be dyed wherein the determination of the value of the first initial state parameter and the value of the second initial state parameter is carried out by means of a common measuring device, wherein the first initial parameter and the second initial parameter are determined substantially simultaneously for each sub-area of the hair area, and
wherein the first initial state parameter and the second initial state parameter describe an initial dyeing state of the hair to be dyed in the sub-area;
- determining the initial dyeing state of the hair to be dyed for the hair area;
- computer-aided determination, for a specific hair dye, of a predicted hair dyeing result of the hair in the hair area, taking into account the determined initial dyeing state of the hair in the hair area
wherein the method is further arranged to determine a hair dye for dyeing hair to a desired hair colour, the method further comprising:
- generating a plurality of hair colouring results by computer-assisted determination, for each hair dye of a plurality of hair dyes, of a predicted hair colouring result for the hair area, taking into account the determined initial colouring state of the hair in the hair area;
- comparing each determined hair colouring result of the generated plurality of hair colouring results with the desired hair colour;
- selecting a hair dye from the hair dyes for dyeing hair on the basis of the determined hair dye results, taking into account the comparison
wherein the comparison of each determined hair colouring result from the plurality of hair colouring results comprises:
- determining a plurality of colour differences, wherein each colour difference of the plurality of colour differences is a colour difference between the desired hair colour and the determined hair colouring result for each of the hair dyes of the plurality of hair dyes;
- determining a minimum colour difference from the plurality of colour differences; and
wherein the selection of a hair dye comprises:
- identifying the hair dye associated with the minimum colour difference as the hair dye for dyeing hair to the desired hair colour.

2. A method according to claim 1,
wherein determining the degree of pre-damage comprises:
- whilst exposing each sub-area of the hair area to near-infrared and/or infrared light, recording, for each sub-area, a spectrum of at least a portion of the near-infrared and/or infrared light which has interacted with each sub-area of the hair area;
- comparing at least a portion of the spectrum with a spectroscopic calibration model obtained from near-infrared and/or infrared spectra and degrees of pre-damage of a plurality of calibration hair samples; and
- determining the degree of pre-damage for each sub-region of the hair region of the hair to be coloured, taking into account the comparison.

3. A method according to any one of claims 1 to 2,
wherein the computer-assisted determination of the predicted hair dyeing result is carried out by means of predictive analytics.

4. A method according to any one of claims 1 to 3,
the method further comprising displaying the hair dyeing result.

5. A method according to any one of claims 1 to 4, further comprising:
- providing information on where a selected dye is available and/or
- enabling the initiation of an online order for the selected dye.

6. A device for determining a hair colouring result of a hair dye for dyeing hair, comprising:
- a data processing device for performing a computer-aided determination of a hair colouring result of a hair dye for dyeing hair, wherein the data processing device is configured to perform the method according to claim 1; and
- a measuring device configured to determine the value of the first initial state parameter and the value of the second initial state parameter for each sub-region of the hair region of the hair to be dyed.

7. A device according to claim 6,
wherein the measuring device detects wavelengths in a spectral range of 200 nm to 25,000 nm, preferably 200 nm to 2,500 nm, and more preferably 380 nm to 2,500 nm.

8. A device according to claim 6 or 7,
wherein the measuring device comprises a digital camera and/or an NIR/IR spectrometer.

9. Apparatus according to claim 6 or 7,
wherein the measuring device comprises a UV/VIS spectrophotometer and/or an NIR/IR spectrometer.

10. A device according to any one of claims 6 to 9,
wherein the data processing device comprises a smartphone, a tablet, a laptop or another computer.

## Revendications

1. Procédé pour déterminer le résultat de coloration d'un produit de coloration capillaire destiné à colorer les cheveux, le procédé comprenant :
- la détermination, pour chaque sous-zone d'une zone de cheveux à teindre, d'une valeur d'un premier paramètre d'état initial et d'une valeur d'un deuxième paramètre d'état initial dans la sous-zone,
le premier paramètre d'état initial étant un degré de détérioration préalable des cheveux à teindre,
le deuxième paramètre d'état initial étant une couleur initiale des cheveux à teindre la détermination de la valeur du premier paramètre d'état initial et de la valeur du deuxième paramètre d'état initial étant effectuée à l'aide d'un dispositif de mesure commun,
le premier paramètre d'état initial et le deuxième paramètre d'état initial étant déterminés essentiellement simultanément pour chaque sous-zone de la zone de cheveux, et
le premier paramètre d'état initial et le deuxième paramètre d'état initial décrivant un état initial de coloration du cheveu à teindre dans la zone partielle ;
- la détermination de l'état initial de coloration du cheveu à teindre pour la zone capillaire ;
- la détermination assistée par ordinateur, pour un colorant capillaire donné, d'un résultat de coloration prévu du cheveu dans la zone capillaire, en tenant compte de l'état de coloration initial déterminé du cheveu dans la zone capillaire
le procédé étant en outre conçu pour déterminer un colorant capillaire permettant de colorer les cheveux dans une couleur souhaitée, le procédé comprenant en outre :
- la génération d'une pluralité de résultats de coloration par détermination assistée par ordinateur, pour chaque colorant capillaire parmi une pluralité de colorants capillaires, d'un résultat de coloration prévu de la zone de cheveux en tenant compte de l'état de coloration initial déterminé des cheveux dans ladite zone de cheveux ;
- la comparaison de chaque résultat de coloration des cheveux déterminé parmi la pluralité de résultats de coloration des cheveux générés avec la couleur de cheveux souhaitée ;
- sélectionner une teinture capillaire parmi les teintures capillaires pour teindre les cheveux sur la base des résultats de coloration déterminés, en tenant compte de la comparaison la comparaison de chaque résultat de coloration des cheveux déterminé parmi la pluralité de résultats de coloration des cheveux comprenant :
- la détermination d'une pluralité d'écarts de couleur, chaque écart de couleur de la pluralité d'écarts de couleur étant un écart de couleur entre la couleur de cheveux souhaitée et le résultat de coloration des cheveux déterminé pour chacun des colorants capillaires de la pluralité de colorants capillaires ;
- la détermination d'un écart de couleur minimal parmi la pluralité d'écarts de couleur ; et la sélection d'un colorant capillaire comprenant :
- la détermination du produit de coloration capillaire associé à l'écart de couleur minimal comme étant le produit de coloration capillaire destiné à colorer les cheveux dans la couleur de cheveux souhaitée.

2. Procédé selon la revendication 1,
dans lequel la détermination du degré de détérioration comprend :
- pendant l'exposition de chaque zone partielle de la zone capillaire à une lumière proche infrarouge et/ou infrarouge, l'enregistrement, pour chaque zone partielle, d'un spectre d'au moins une partie de la lumière proche infrarouge et/ou infrarouge qui a interagi avec chaque zone partielle de la zone capillaire ;
- la comparaison d'au moins une partie du spectre avec un modèle d'étalonnage spectroscopique obtenu à partir de spectres dans le proche infrarouge et/ou l'infrarouge et de degrés de détérioration préalable d'une pluralité d'échantillons de cheveux d'étalonnage ; et
- Déterminer le degré de détérioration pour chaque zone partielle de la zone capillaire du cheveu à colorer en tenant compte de la comparaison.

3. Procédé selon l'une des revendications 1 à 2,
dans lequel la détermination assistée par ordinateur du résultat de coloration capillaire prévu est effectuée au moyen d'une analyse prédictive.

4. Procédé selon l'une des revendications 1 à 3,
le procédé comprenant en outre la représentation du résultat de la coloration des cheveux.

5. Procédé selon l'une des revendications 1 à 4, comprenant en outre :
- l'indication des points de vente où le produit de coloration sélectionné est disponible et/ou
- la possibilité de passer une commande en ligne du colorant sélectionné.

6. Dispositif permettant de déterminer le résultat de coloration d'un colorant capillaire destiné à colorer les cheveux, comprenant :
- un dispositif de traitement de données destiné à effectuer une détermination assistée par ordinateur d'un résultat de coloration d'un colorant capillaire destiné à colorer les cheveux, le dispositif de traitement de données étant agencé pour exécuter le procédé selon la revendication 1 ; et
- un dispositif de mesure qui est agencé pour effectuer la détermination de la valeur du premier paramètre d'état initial et de la valeur du deuxième paramètre d'état initial pour chaque sous-zone de la zone capillaire des cheveux à teindre.

7. Dispositif selon la revendication 6,
le dispositif de mesure détectant des longueurs d'onde dans une gamme spectrale comprise entre 200 nm et 25 000 nm, de préférence entre 200 nm et 2 500 nm, et plus préférablement entre 380 nm et 2 500 nm.

8. Dispositif selon la revendication 6 ou 7,
dans lequel le dispositif de mesure comprend un appareil photo numérique et/ou un spectromètre NIR/IR.

9. Dispositif selon la revendication 6 ou 7,
dans lequel le dispositif de mesure comprend un spectrophotomètre UV/VIS et/ou un spectromètre NIR/IR.

10. Dispositif selon l'une des revendications 6 à 9,
dans lequel le dispositif de traitement des données comprend un smartphone, une tablette, un ordinateur portable ou tout autre ordinateur.
